(19)

**Europäisches Patentamt**
**European Patent Office**
**Office européen des brevets**

(11)  **EP 4 717 592 A1**

(12) **EUROPEAN PATENT APPLICATION**

(43) Date of publication:
**01.04.2026  Bulletin 2026/14**

(51) International Patent Classification (IPC):
**B64C 11/26** (2006.01)   **F01D 5/14** (2006.01)

(21) Application number: **25191205.1**

(52) Cooperative Patent Classification (CPC):
**B64C 11/26**

(22) Date of filing: **23.07.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.09.2024  US 202418897399**

(71) Applicant: **General Electric Company**
**Cincinnati, Ohio 45215 (US)**

(72) Inventors:
- **KRAY, Nicholas Joseph**
  **Evendale, 45215 (US)**
- **YADAV, Abhijeet Jayshingrao**
  **Evendale, 45215 (US)**
- **JAIN, Nitesh**
  **Evendale, 45215 (US)**
- **BRYANT, Jr., Gary Willard**
  **Evendale, 45215 (US)**
- **WORTHOFF, Frank**
  **Evendale, 45215 (US)**

(74) Representative: **Openshaw & Co.**
**8 Castle Street**
**Farnham, Surrey GU9 7HR (GB)**

(54) **AIRFOIL ASSEMBLY**

(57)     An airfoil assembly (100) comprising: an airfoil portion (102) having an outer wall (108) extending between a root (114) and a tip (116) in a spanwise direction (Sd), and between a leading edge (110) and a trailing edge (112), the outer wall (108) defining an interior (118) of the airfoil portion (102); and a spar (106) coupled to the airfoil portion (102) and extending into the interior (118), the spar (106) comprising a spar centerline (122), a spar body (124) defining a perimeter surface (126), and a plurality of pockets (128) provided within the spar body (124), each pocket of the plurality of pockets (128) forming a respective cavity (130) within the spar body (124).

FIG. 3

# Description

## TECHNICAL FIELD

The disclosure generally relates to an airfoil assembly, and more specifically to an airfoil assembly including an airfoil portion and a spar.

## BACKGROUND

Turbine engines, and particularly gas or combustion turbine engines, are rotary engines that extract energy from a flow of gases passing through a fan with a plurality of fan blades, then into the engine through a series of compressor stages, which include pairs of rotating blades and stationary vanes, through a combustor, and then through a series of turbine stages, which include pairs of rotating blades and stationary vanes. The blades are mounted to rotating disks, while the vanes are mounted to stator disks.

During operation, air is brought into the compressor section through the fan section where it is then pressurized in the compressor and mixed with fuel and ignited in the combustor for generating hot combustion gases which flow downstream through the turbine stages where the air is expanded and exhausted out an exhaust section. The expansion of the air in the turbine section is used to drive the rotating sections of the fan section and the compressor section. The drawing in of air, the pressurization of the air, and the expansion of the air is done, in part, through rotation of various rotating blades mounted to respective disks throughout the fan section, the compressor section, and the turbine section, respectively. The rotation of the rotating blades imparts mechanical stresses along various portions of the blade; specifically, where the blade is mounted to the disk.

## BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:

FIG. 1 is a schematic cross-sectional view of a turbine engine, the turbine engine being an open rotor turbine engine in accordance with an exemplary embodiment of the present disclosure.
FIG. 2 is a schematic illustration of an airfoil assembly suitable for use within the turbine engine of FIG. 1, the airfoil assembly including an airfoil portion and a spar.
FIG. 3 is a schematic cross-sectional view of the airfoil assembly as seen from sectional line III-III of FIG. 2, further illustrating the spar having a spar body and a set of pockets provided within the spar body.
FIG. 4 is a schematic cross-sectional view of the spar as seen from sectional line IV-IV of FIG. 3, further illustrating two through pockets of the set of pockets.
FIG. 5 is a schematic cross-sectional view of the spar as seen from sectional line V-V of FIG. 3, further illustrating two partial through pockets of the set of pockets.
FIG. 6 is a schematic cross-sectional view of the spar as seen from sectional line VI-VI of FIG. 3, further illustrating a through pocket and a partial through pocket of the set of pockets.
FIG. 7 is a schematic cross-sectional view of the spar as seen from sectional line VII-VII of FIG. 3, further illustrating an internal pocket of the set of pockets.

## DETAILED DESCRIPTION

Aspects of the disclosure herein are directed to an airfoil assembly for a turbine engine. The airfoil assembly includes an airfoil portion and a spar. The spar includes a spar body defining a perimeter surface of the spar. The spar includes a set of pockets provided within the spar body. Each pocket of the set of pockets forms a cavity provided within the spar body.

The set of pockets are used to lighten an overall weight of the spar without sacrificing structural integrity of the spar. For purposes of illustration, the present disclosure will be described with respect to an airfoil assembly for a turbine engine, specifically a fan blade of the turbine engine. It will be understood, however, that aspects of the disclosure described herein are not so limited and can have general applicability within other engines or within other portions of the turbine engine. For example, the disclosure can have applicability for an airfoil assembly in other engines or vehicles. Further still, the disclosure can be used to provide benefits in industrial, commercial, and residential applications.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore / forward can mean upstream and aft /rearward can mean downstream.

Additionally, as used herein, the terms "axial" and "longitudinal" both refer to a direction parallel to a centerline axis of an object, while the terms "radial" or "radially" refer to a direction that is perpendicular to the axial direction or away from a common center. For example, in the overall context of a turbine engine, radial refers to a direction along a ray extending between a center longitudinal axis of the engine and an outer engine circumference. Furthermore, as used herein, the term "set" or a "set" of elements can be any number of elements, including only one.

Further, as used herein, the term "fluid" or iterations thereof can refer to any suitable fluid within the gas turbine engine at least a portion of the gas turbine engine is exposed to such as, but not limited to, combustion gases, ambient air, pressurized airflow, working airflow, or any combination thereof. It is yet further contemplated that the gas turbine engine can be another suitable turbine engine such as, but not limited to, a steam turbine engine or a supercritical carbon dioxide turbine engine. As a non-limiting example, the term "fluid" can refer to steam in a steam turbine engine, or to carbon dioxide in a supercritical carbon dioxide turbine engine.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, secured, fastened, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The term "composite," as used herein is, is indicative of a component having two or more materials. A composite can be a combination of at least two or more metallic, non-metallic, or a combination of metallic and non-metallic elements or materials. Examples of a composite material can be, but are not limited to, a polymer matrix composite (PMC), a ceramic matrix composite (CMC), a metal matrix composite (MMC), carbon fibers, a polymeric resin, a thermoplastic resin, bismaleimide (BMI) materials, polyimide materials, an epoxy resin, glass fibers, and silicon matrix materials.

As used herein, a "composite" component refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. Adhesives can include resin and phenolics, wherein the adhesive can require curing at elevated temperatures or other hardening techniques.

As used herein, PMC refers to a class of materials. By way of example, the PMC material is defined in part by a prepreg, which is a reinforcement material pre-impregnated with a polymer matrix material, such as thermoplastic resin. Non-limiting examples of processes for producing thermoplastic prepregs include hot melt pre-pregging in which the fiber reinforcement material is drawn through a molten bath of resin and powder pre-pregging in which a resin is deposited onto the fiber reinforcement material, by way of non-limiting example electrostatically, and then adhered to the fiber, by way of non-limiting example, in an oven or with the assistance of heated rollers. The prepregs can be in the form of unidirectional tapes or woven fabrics, which are then stacked on top of one another to create the number of stacked plies desired for the part.

Multiple layers of prepreg are stacked to the proper thickness and orientation for the composite component and then the resin is cured and solidified to render a fiber reinforced composite part. Resins for matrix materials of PMCs can be generally classified as thermosets or thermoplastics. Thermoplastic resins are generally categorized as polymers that can be repeatedly softened and flowed when heated and hardened when sufficiently cooled due to physical rather than chemical changes. Notable example classes of thermoplastic resins include nylons, thermoplastic polyesters, polyaryletherketones, and polycarbonate resins. Specific example of high performance thermoplastic resins that have been contemplated for use in aerospace applications include, polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg, in another non-limiting example, with the use of thermoplastic polymers, it is possible to utilize a woven fabric. Woven fabric can include, but is not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers or matrix material to a mold or cavity. The dry fibers or matrix material can include prepreg, braided material, woven material, or any combination thereof.

Resin can be pumped into or otherwise provided to the mold or cavity to impregnate the dry fibers or matrix material. The combination of the impregnated fibers or matrix material and the resin is then cured and removed from the mold. When removed from the mold, the composite component can require post-curing processing.

It is contemplated that RTM can be a vacuum assisted process. That is, the air from the cavity or mold can be removed and replaced by the resin prior to heating or curing. It is further contemplated that the placement of the dry fibers or matrix material can be manual or automated. As a non-limiting example, the placement of dry fibers or matrix material can be done through automatic fiber placement (AFP) or manually by hand.

The dry fibers or matrix material can be contoured to shape the composite component or direct the resin. Optionally, additional layers or reinforcing layers of a material differing from the dry fiber or matrix material can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide ($Al_2O_3$), silicon dioxide ($SiO_2$), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide ($Al_2O_3$), silicon dioxide ($SiO_2$), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide ($Al_2O_3$), silicon dioxide ($SiO_2$), aluminosilicates, and mixtures thereof. Aluminosilicates can include crystalline materials such as mullite ($3Al_2O_3 \cdot 2SiO_2$), as well as glassy aluminosilicates.

In certain non-limiting examples, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

The term "metallic" as used herein is indicative of a material that includes metal such as, but not limited to, titanium, iron, aluminum, stainless steel, and nickel alloys. A metallic material or alloy can be a combination of at least two or more elements or materials, where at least one is a metal.

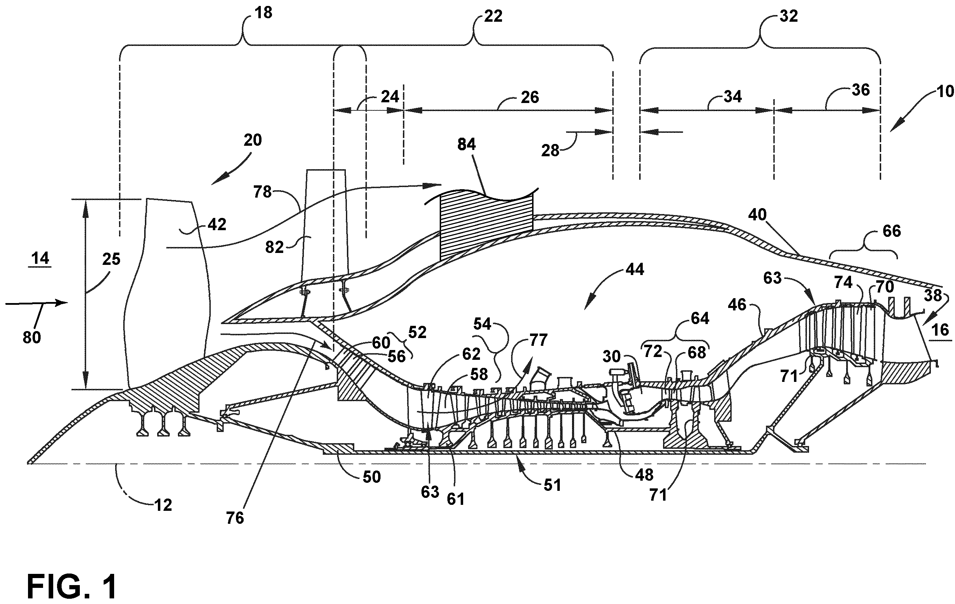

FIG. 1 is a schematic cross-sectional diagram of a turbine engine 10, specifically an open rotor or unducted turbine engine for an aircraft although the disclosure is not so limited. The turbine engine 10 has a generally longitudinally extending axis or engine centerline 12 extending from a forward end 14 to an aft end 16. The turbine engine 10 includes, in downstream serial flow relationship, a set of circumferentially spaced blades or propellers defining a fan section 18 including a fan 20, a compressor section 22 including a booster or low pressure (LP) compressor 24 and a high pressure (HP) compressor 26, a combustion section 28 including a combustor 30, a turbine section 32 including an HP turbine 34, and an LP turbine 36, and an exhaust section 38. The compressor section 26, the combustion section 28 and the turbine section 32 are in serial flow arrangement. The turbine engine 10 as described herein is meant as a non-limiting example, and other architectures are possible, such as, but not limited to, a steam turbine engine, a supercritical carbon dioxide turbine engine, or any other suitable turbine engine.

An exterior surface, defined by a housing or nacelle 40, of the turbine engine 10 extends from the forward end 14 of the turbine engine 10 toward the aft end 16 of the turbine engine 10 and covers at least a portion of the compressor section 22, the combustion section 28, the turbine section 32, and the exhaust section 38. The fan section 18 can be positioned at a forward portion of the nacelle 40 and extend radially outward from the nacelle 40 of the turbine engine 10. Specifically, the fan section 18 extends radially outward from the nacelle 40. The fan section 18 includes a set of fan blades 42, and a set of fan vanes 82 downstream the set of fan blades 42, both disposed radially from and circumferentially about the engine centerline 12. The set of fan blades 42 and the set of fan vanes 82 extend radially outward from respective portions of the nacelle 40. As such, the set of fan blades 42 and the set of fan vanes 82 can be defined as an exterior set of fan blades and an exterior set of fan vanes 82, respectively. The turbine engine 10 includes any number of one or more sets of rotating blades or propellers (e.g., the set of fan blades 42) disposed upstream of the set of fan vanes 82. As a non-limiting example, the turbine engine 10 can include multiple sets of fan blades 42 or set of fan vanes 82. As such, the turbine engine 10 is further defined as a single-fan turbine engine. The turbine engine 10 is further defined by the location of the fan section 18 with respect to the combustion section 28. The fan section 18 can be upstream, downstream, or in-line with the axial positioning of the combustion section 28.

The compressor section 22, the combustion section 28, and the turbine section 32 are collectively referred to as an engine core 44, which generates combustion gases. The engine core 44 is surrounded by an engine casing 46, which is operatively coupled with a portion of the nacelle 40 of the turbine engine 10.

An HP shaft or spool 48 disposed coaxially about the engine centerline 12 of the turbine engine 10 drivingly connects the HP turbine 34 to the HP compressor 26. An LP shaft or spool 50, which is disposed coaxially about the engine centerline 12 of the turbine engine 10 within the larger diameter annular HP spool 48, drivingly connects the LP turbine 36 to the LP compressor 24 and fan 20. The spools 48, 50 are rotatable about the engine centerline 12 and coupled to a set of rotatable elements, which collectively define a rotor 51.

It will be appreciated that the turbine engine 10 is either a direct drive or integral drive engine utilizing a reduction gearbox coupling the LP shaft or spool 50 to the fan 20.

The LP compressor 24 and the HP compressor 26, respectively, include a set of compressor stages 52, 54, in which a set of compressor blades 56, 58 rotate relative to a corresponding set of static compressor vanes 60, 62 (also called a nozzle) to compress or pressurize the stream of fluid passing through the stage. In a compressor stage 52, 54, multiple compressor blades 56, 58 are provided in a ring and extend radially outwardly relative to the engine centerline 12, from a blade platform to a blade tip, while the corresponding static compressor vanes 60, 62 are positioned upstream of and adjacent to the compressor blades 56, 58. It is noted that the number of blades, vanes, and compressor stages shown in FIG. 1 were selected for illustrative purposes only, and that other numbers are possible.

The compressor blades 56, 58 for a stage of the compressor section 22 are mounted to a disk 61, which is mounted to the corresponding one of the HP and LP spools 48, 50, with each stage having its own disk 61. The static compressor vanes 60, 62 for a stage of the compressor section 22 are mounted to the engine casing 46 in a circumferential arrangement.

The HP turbine 34 and the LP turbine 36, respectively, include a set of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage of the set of turbine stages 64, 66, multiple turbine blades 68, 70 are provided in a ring and extends radially outwardly relative to the engine centerline 12, from a blade platform to a blade tip, while the corresponding static turbine vanes 72, 74 are positioned upstream of and adjacent to the turbine blades 68, 70. It is noted that the number of blades, vanes, and turbine stages shown in FIG. 1 were selected for illustrative purposes only, and that other numbers are possible.

The turbine blades 68, 70 for a stage of the turbine section 32 are mounted to a disk 71, which is mounted to the corresponding one of the HP and LP spools 48, 50, with each stage having a dedicated disk 71. The static turbine vanes 72, 74 for a stage of the turbine section 32 are mounted to the engine casing 46 in a circumferential arrangement.

Rotary portions of the turbine engine 10, such as the compressor blades 56, 58, and the turbine blades 68, 70 among the compressor section 22 and the turbine section 32 are also referred to individually or collectively as the rotor 51. As such, the rotor 51 refers to the combination of rotating elements throughout the turbine engine 10.

Complementary to the rotary portions, the stationary portions of the turbine engine 10, such as the static compressor vanes 60, 62 and static turbine vanes 72, 74 among the compressor section 22 and the turbine section 32 are also referred to individually or collectively as a stator 63. As such, the stator 63 refers to the combination of non-rotating elements throughout the turbine engine 10.

The nacelle 40 is operatively coupled to the turbine engine 10 and covers at least a portion of the engine core 44, the engine casing 46, or the exhaust section 38. At least a portion of the nacelle 40 extends axially forward or upstream the illustrated position. For example, the nacelle 40 extends axially forward such that a portion of the nacelle 40 overlays or covers a portion of the fan section 18 or a booster section (not illustrated) of the turbine engine 10. The turbine engine includes a pylon 84. The pylon 84 mounts the turbine engine 10 to an exterior structure (e.g., a fuselage of an aircraft, a wing, a tail wing, etc.).

It will be appreciated that the turbine engine 10 can be split into at least two separate portions; a rotor portion and a stator portion. The rotor portion can be defined as any portion of the turbine engine 10 that rotates about a respective rotational axis. the stator portion can be defined by a combination of non-rotating elements provided within the turbine engine 10. As a non-limiting example, the rotor portion can include the plurality of fan blades 42, the compressor blades 56, 58, or the turbine blades 68, 70. As a non-limiting example, the stator portion can include the set of fan vanes 82, the static compressor vanes 60, 62, or the static turbine vanes 72, 74.

During operation of the turbine engine 10, a freestream airflow 80 flows against a forward portion of the turbine engine 10. A first portion of the freestream airflow 80 flows along the nacelle 40 and over the set of stationary fan vanes 82 as an exterior airflow 78. The exterior airflow 78 flows past the set of stationary fan vanes 82, following the curvature of the nacelle 40 and toward the exhaust section 38. A second portion of the freestream airflow 80 enters an annular area 25 defined by a swept area between an outer surface of the nacelle 40 and the tip of the fan blade 42, with this air flow being a working airflow 76. A portion of the working airflow 76 enters the engine core 44 and used for combustion within the engine core 44.

More specifically, the working airflow 76 flows into the LP compressor 24, which then pressurizes the working airflow 76 thus defining a pressurized airflow that is supplied to the HP compressor 26, which further pressurizes the air. The working airflow 76, or the pressurized airflow, from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the working airflow 76, or exhaust gas, is ultimately discharged from the turbine engine 10 via the exhaust section 38. The driving of the LP turbine 36 drives the LP spool 50 to rotate the fan 20 and the LP compressor 24. The working airflow 76, including the pressurized airflow and the combustion gases, defines a working airflow that flows through the compressor section 22, the combustion section 28, and the turbine section 32 of the turbine engine 10.

The working airflow 76 and at least some of the exterior airflow 78 merge downstream of the exhaust section 38 of the turbine engine 10. The working airflow 76 and the exterior airflow 78, together, form an overall thrust of the turbine engine 10.

It is contemplated that a portion of the working airflow 76 is drawn as bleed air 77 (e.g., from the compressor section 22). The bleed air 77 provides an airflow to engine components requiring cooling. The temperature of the working airflow 76 exiting the combustor 30 is significantly increased with respect to the working airflow 76 within the compressor section 22. As such, cooling provided by the bleed air 77 is necessary for operating such engine components in the heightened temperature environments or a hot portion of the turbine engine 10. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid are, but are not limited to, fluid discharged from the LP compressor 24 or the HP compressor 26.

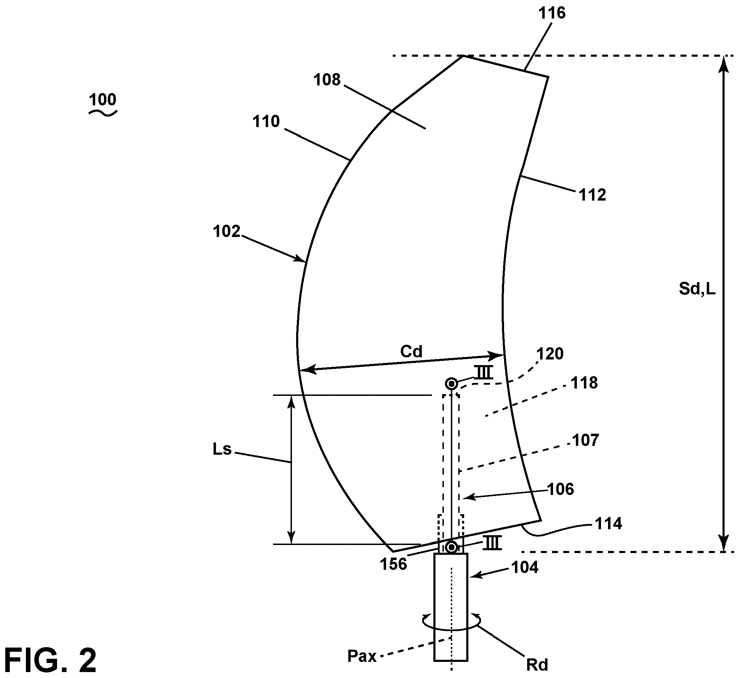

FIG. 2 is a schematic illustration of an airfoil assembly 100 suitable for use within the turbine engine 10 of FIG. 1. The airfoil assembly 100 can be provided within the rotor portion or stator portion of the turbine engine 10. The airfoil assembly 100 includes an airfoil portion 102 that is any suitable airfoil of the turbine engine 10. As a non-limiting example, the airfoil portion 102 can be a blade of the plurality of fan blades 42, or a blade from the compressor blades 56, 58 or the turbine blades 68, 70. As a non-limiting example, the airfoil portion 102 can be a vane of the set of stationary fan vanes 82. It is contemplated that the airfoil portion 102 can be a blade, vane, airfoil, or other component of any turbine engine, such as, but not limited to, a gas turbine engine, a turboprop engine, a turboshaft engine, a ducted turbofan engine, or the turbine engine 10 (e.g., the unducted turbine engine). As a non-limiting example, the airfoil assembly 100 can be one of the plurality of fan blades 42 defined as a set of external fan blades (extending outwardly from the nacelle 40 of FIG. 1) or one of the plurality of fan vanes set of stationary fan vanes 82 defined as a set of external fan vanes (extending outwardly from the nacelle 40).

The airfoil portion 102 includes an outer wall 108 bounding an interior 118. The outer wall 108 extends between a leading edge 110 and a trailing edge 112 to define a chordwise direction (Cd). The outer wall 108 further extends between a root 114 and a tip 116 to define a spanwise direction (Sd). The airfoil portion 102 has a span length (L) measured along the spanwise direction (Sd) from the root 114 at 0% of the span length (L) to the tip 116 at 100% of the span length (L).

The airfoil assembly 100 includes a trunnion 104 and a spar 106. The spar 106 extends into the interior 118 and is formed with (coupled to or integrally formed with) the airfoil portion 102. The spar 106 extends outwardly from the root 114. The spar 106 can be operably coupled to the trunnion 104 (e.g., bonding, adhesion, fastening, or any other suitable coupling method).

The airfoil assembly 100 can include additional structure surrounding a respective portion of the spar 106. As a non-limiting example, the airfoil assembly 100 can include a sleeve 156 provided along a respective portion of the spar 106. The sleeve 156 can extend into the interior 118. The sleeve 156 can extend into the trunnion 104. The sleeve 156 can be coupled to or integrally formed with the trunnion 104. Alternatively, the sleeve 156 can be omitted from the airfoil assembly 100. The sleeve 156, when included, is used to stabilize the spar 106 and increase the resistance of the spar 106 against a bending moment.

The spar 106 includes a distal end 120. The spar 106 includes a portion 107 defined as a respective portion of the spar 106 that is provided within the interior 118. The portion 107 of the spar 106 extends a spar interior length (Ls) in the spanwise direction (Sd) between the distal end 120 and where the spar 106 meets the root 114. The spar interior length (Ls) is greater than or equal to 30% and less than or equal to 90% of the span length (L). It will be appreciated that the spar 106 includes a total spar length defined as the total length that the spar 106 extends in the spanwise direction (Sd).

At least a portion of the airfoil assembly 100 includes a composite material. As a non-limiting example, the airfoil portion 102 and the spar 106 can each include a composite material. By way of non-limiting example, the outer wall 108, the spar 106, or a combination thereof can include at least a PMC portion, a CMC portion, a polymeric portion, or both. The PMC portion can include, but is not limited to, a matrix of thermoset (epoxies, phenolics) or thermoplastic (polycarbonate, polyvinylchloride, nylon, acrylics) and embedded glass, carbon, steel, or a combination thereof. It will be appreciated that the airfoil portion 102 can include a composite material, a non-composite metallic material, any other suitable material, or a combination thereof. As a non-limiting example, the trunnion 104 can be any suitable material such as, but not limited to, a metallic material or a composite material.

During operation of the airfoil assembly 100, the trunnion 104 can rotate about a pitch axis (Pax) in a rotational direction (Rd). As the spar 106 couples the trunnion 104 to the airfoil portion 102, rotation of the trunnion 104 in the rotational direction (Rd) causes the airfoil portion 102 to rotate about the pitch axis (Pax). This rotation is used to control the pitch of the airfoil assembly 100. As such, the airfoil assembly 100 is defined as a variable pitch airfoil assembly. The pitch of the airfoil assembly 100 can be varied based on the operation or intended operation of the turbine engine that the airfoil assembly 100 is provided within.

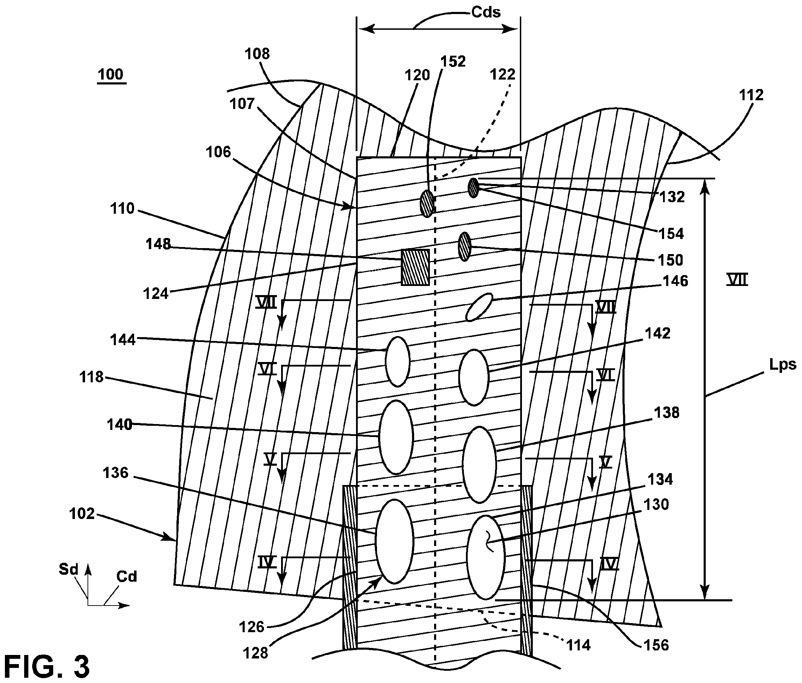

FIG. 3 is a schematic cross-sectional view of a portion of the airfoil assembly 100 as seen from sectional line III-III of FIG. 2. The interior 118 of the airfoil portion 102 is illustrated as containing a solid material. It will be appreciated, however, that at least a portion of the interior 118. The spar 106 includes a spar body 124 having a spar centerline 122. The spar centerline 122 is equidistant between opposing sides of the spar 106 in the chordwise direction (Cd). The spar body 124 includes a set of pockets 128 formed within the spar body 124. The spar body 124 defines a perimeter surface 126, which is an exterior surface of the spar 106.

The set of pockets 128 are provided along any suitable portion of the spar body 124. As a non-limiting example, the set of pockets 128 are provided only along the interior portion 107. The set of pockets 128 are axially spaced along the spar 106, with respect to the spar centerline 122, or otherwise spaced along the spar 106 in the spanwise direction (Sd). The set of pockets 128 can be radially spaced, with respect to the spar centerline 122, or otherwise spaced in the chordwise direction (Cd). It will be appreciated that the set of pockets 128 can be circumferentially spaced from one another with respect to the spar centerline 122.

Each pocket of the set of pockets 128 forms a respective cavity 130 provided within the spar body 124. Each respective cavity 130 includes a volume defined as a three-dimensional area taken up by the respective cavity 130 within the spar 106. The three-dimensional area of the respective cavity 130 can be any suitable three-dimensional shape such as, but not limited to, an ovoid, a rectangular prism, a pyramid, a sphere, or the like. As used herein, a "cavity" or iterations thereof refers to a cutout or hollow formed within the spar 106. Each cavity defined by the set of pockets 128 within the spar body 124 is further defined as a region within the spar body 124 in which the material of the spar body 124 forms a perimeter of each pocket of the set of pockets 128 and wall between adjacent pockets of the set of pockets 128.

The set of pockets 128 include any number of one or more pockets. As a non-limiting example, the set of pockets 128 include a first pocket 134, a second pocket 136, a third pocket 138, a fourth pocket 140, a fifth pocket 142, a sixth pocket 144, a seventh pocket 146, an eighth pocket 148, a ninth pocket 150, a tenth pocket 152 and a last pocket 154 (illustrated as an eleventh pocket). The first pocket 134 is defined as a pocket of the set of pockets 128 nearest the root 114 in the spanwise direction (Sd). The last pocket 154 is defined as a pocket of the set of pockets 128 nearest the distal end 120 in the spanwise direction (Sd). It will be appreciated that the set of pockets 128 can include any number of greater than or equal to one pocket and less than or equal to 50 pockets.

The set of pockets 128 extend along the spar 106 in the spanwise direction (Sd) a pocket extension length (Lps) between the first pocket 134 and the last pocket 154. The pocket extension length (Lps) is defined as the total axial distance that the set of pockets 128 inhabit along the spar 106 with respect to the spar centerline 122. The pocket extension length (Lps) is less than or equal to the spar interior length (Ls) (FIG. 2). As a non-limiting example, the pocket extension length (Lps) is greater than or equal to 0.1% and less than or equal to 100% of the spar interior length (Ls). As a non-limiting example, the pocket extension length (Lps) is greater than or equal to 1% and less than or equal to 10% of the spar interior length (Ls).

It is contemplated that the set of pockets 128 can include a single, continuous pocket. Put another way, the set of pockets 128 can include a single continuous pocket that is the only pocket provided within the interior 118. The single, continuous pocket of the set of pockets 128 can extend any suitable length within the spar 106. As a non-limiting example, the spar 106 can include a single, continuous pocket with the pocket extension length (Lps) that is greater than or equal to 0.1% and less than or equal to 100% of the spar interior length (Ls). As a non-limiting example, the spar 106 can include a single, continuous pocket with the pocket extension length (Lps) that is greater than or equal to 1% and less than or equal to 10% of the spar interior length (Ls). The spar 106 may include a plurality of pockets each with pocket extension lengths (Lps) between 1% to 10% of the spar interior length (Ls).

The spar 106, specifically the interior portion 107 of the spar 106, extends in the chordwise direction (Cd) a chordwise extension length (Cds). The shape of the spar 106 can be quantified by an equation between the spar interior length (Ls) of FIG. 2 in relation to the chordwise extension length (Cds). Specifically, though the following equation where "V" is the rectangular volume of the interior portion 107 of the spar 106.

$$V = (Cds \times Ls)^3$$

The set of pockets 128 are located within the rectangular volume (V). It has been found that adding the set of pockets 128 to the rectangular volume (V) (e.g., the interior portion 107) reduces the overall weight of the spar 106 without sacrificing the overall stiffness of the spar 106. Put another way, providing the set of pockets 128 within the rectangular volume (V) has been found to reduce the weight of the spar 106 without sacrificing the structural integrity of the spar 106.

At least one pocket of the set of pockets 128 can be provided within a region of the spar 106 that is encased by the sleeve 156. Alternatively, the set of pockets 128 can begin after a termination of the sleeve 156 within the interior 118 in the spanwise direction (Sd).

In the illustrated example, at least two pockets of the set of pockets 128 are identical. Although it will be understood that this need not be the case. Further still, in the illustrated example, at least two pockets of the set of pockets 128 include a differing construction. Although it will be understood that this need not be the case. As a non-limiting example, the respective cavity 130 formed by the first pocket 134 can have a larger volume than the respective cavity 130 of the second pocket 136. The set of pockets 128 can include at least two pockets having respective volumes defined by different shapes. As a non-limiting example, the eighth pocket 148 is formed as a rectangular prism while, for example, the first pocket 134 is formed as an ovoid. It is contemplated that the shapes of each pocket of the set of pockets 128 is selected based on the anticipated forces that can be applied to the spar 106 during operation of the airfoil assembly 100. As a non-limiting example, utilizing an ovoid or ovular shape has been found to help evenly distribute forces along the pocket. As a non-limiting example, utilizing a triangular shape and oriented a vertex of the triangular shape to be in-line with an anticipated force can help concentrate the force along the pocket and distribute the force to the other two vertices.

The volume of each respective cavity 130 of the set of pockets 128 can serially increase in size in the spanwise direction (Sd) from the first pocket 134 and to the last pocket 154. Put another way, the respective cavity 130 of the first pocket 134 includes a volume greater than a volume of the respective cavity 130 of the second pocket 136, the volume of the respective cavity 130 of the second pocket 136 is larger than a volume of the respective cavity 130 of the third pocket 138, and so on to the last pocket 154.

The set of pockets 128 are defined by a pocket density. The pocket density refers to a relationship between the spar body 124 of the spar 106 and the set of pockets 128. The pocket density can vary axially along the spar centerline 122. As a non-limiting example, the pocket density near the root 114 can be larger than the pocket density near the distal end 120. The pocket density can decrease from an area of the spar 106 near the root 114 to the distal end 120. Put another way, the overall volume of the spar 106 taken up by the set of pockets 128 decreases from where the set of pockets 128 start (e.g., near the root 114) and to an area where the set of pockets 128 end (e.g., near the distal end 120). It is contemplated that during operation, stresses will be experienced along the spar 106 due to operational forces (described in further detail below) associated with the operation of the airfoil assembly. The density of the set of pockets 128 is varied based on how large the anticipated stresses at localized positions along the spar 106 are. As a non-limiting example, decreasing the density of the set of pockets 128 in a localized area, increases a total area of the spar in the localized area inhabited by a solid material of the spar 106. Increasing the solid material of the spar 106, in turn, reduces the overall stresses within the localized area.

As a further non-limiting example, at least two pockets of the set of pockets 128 can include varying orientations. By way of further non-limiting example, the seventh pocket 146 can be angled or otherwise have a varying orientation with respect to another pockets of the set of pockets 128, as illustrated. It will be appreciated that the orientation of each pocket of the set of pockets 128 can be varied to maximize a total number of pockets within a localized area. Put another way, the orientation of each pocket of the set of pockets 128 can be varied to increase or decrease the localized density of the set of pockets 128 to achieve a desired density at different locations of the spar. Further, varying the orientation can be used to better accommodate the anticipated forces along the spar 106. The variation of the orientations can allow for forces within the spar to be distributed within the spar 106 in a desired direction.

By way of further non-limiting example, at least one pocket of the set of pockets 128 can include a filler material 132 provided within the respective cavity 130. Any number of the set of pockets 128 can include the filler material 132. As a non-limiting example, the eighth pocket 148, the ninth pocket 150, the tenth pocket 152, and the last pocket 154 can include the filler material 132, while the first pocket 134 through the seventh pocket 146 can be formed without the filler material 132. When not formed with the filler material 132, a pocket of the set of pockets 128 includes the respective cavity 130 filled with a gas (e.g., air) or otherwise formed as a vacuum. The respective cavity 130 of at least two pockets of the set of pockets 128 can include the same filler materials 132. The respective cavity 130 of at least two pockets of the set of pockets 128 can include different filler materials 132. It is contemplated that the filler material 132 can be used for manufacturing purposes. For example, during a manufacturing process of the spar 106, the filler material 132 can be applied to allow for the composite resin material of the spar body 124 to form around the respective pocket of the set of pockets 128 including the filler material 132.

The filler material 132 is any suitable material provided within the respective cavity 130 that contributes to a weight reduction in the airfoil assembly 100, as will be described in further detail below. For example, the weight of a composite spar body 124 can be reduced when the filler material 132 is a foam filler material. The filler material 132 can be a single material. The filler material 132 can be a combination of materials. The filler material 132 can take up an entirety or less than an entirety of the volume of the respective cavity 130. As a non-limiting example, the filler material 132 can take up less than the entirety of the volume of the respective cavity 130 such that a gas is provided within or a vacuum is formed within the remainder of the volume. The filler material 132 can vary between pockets of the set of pockets 128. As a non-limiting example, at least two pockets of the set of pockets 128 can include varying (different) filler materials 132 with respect to each other.

The set of pockets 128 can be formed within the spar body 124 in any suitable manner. As a non-limiting example, the spar body 124 can be cast, 3D printed or otherwise cured in a shape to include the set of pockets 128 such that the set of pockets 128 are integrally formed with the spar 106. As a non-limiting example, the spar 106 can be a composite preform composed of layers of stacked composite plies. The composite preform can include regions without the stacked composite plies corresponding to the set of pockets 128. In some embodiments, two or more pockets 128 are separated by composite material. In some embodiments, one or more pockets 128 are cavities between layers of stacked composite plies. As a non-limiting example, the spar 106 can be formed as a solid piece of material and the set of pockets 128 can be subsequently machined into the solid material of the spar 106.

The spar 106 can be symmetric about the spar centerline 122. The spar 106 can be asymmetric about the spar centerline 122. As a non-limiting example, the set of pockets 128 can be axially staggered with respect to the spar centerline 122 such that the spar 106 is asymmetric about the spar centerline 122. As a non-limiting example, the set of pockets 128 can be asymmetrically distributed along the axial span of the spar 106, with respect to the spar centerline 122.

The set of pockets 128 are used to lighten the overall weight of the spar 106 with respect to a spar formed without the set of pockets. As a non-limiting example, the spar body 124 includes a material or a collection of materials. The spar body 124 is defined by a first density. The first density is one of a density of the material when the spar body 124 includes a single material or an average density of the collection of the materials). The first density of the spar body 124 can be greater than or equal to $0.04 lbs/in^3$ and less than or equal to $0.08 lbs/in^3$. Each respective cavity 130 includes a second density. The second density is defined as the density of a gas (e.g., air) within the cavity, or a density of the filler material 132 provided within the cavity. The first density is larger than the second density. As the first density is larger than the second density, the set of pockets 128 define regions of the spar 106 with a decreased density or weight with respect to a material of the spar body 124. Decreasing the weight of the spar 106, in turn, reduces the overall weight of the airfoil assembly 100. As a non-limiting example, the overall weight of the airfoil assembly 100 can be reduced by greater than or equal to 5% and less than or equal to 25% of a weight of an airfoil assembly not including the spar 106 with the set of pockets 128. A decrease in the overall weight of the airfoil assembly 100 reduces the overall weight of the turbine engine (e.g., the turbine engine 10 of FIG. 1), which in turn increases the overall efficiency of the turbine engine.

During operation, the airfoil assembly 100 experiences stresses associated with at least one of the rotational movement of the airfoil assembly 100, an impingement of a working airflow along the outer wall 108 of the airfoil portion 102, an external force (e.g., a force applied to the airfoil portion 102 from exterior the turbine engine), or a combination thereof. These stresses can be transferred to the spar 106. The stresses are in the form of at least one of a torsional stress, a bending stress, or a combination thereof.

The set of pockets 128 are formed to lighten the overall weight of the spar 106 without sacrificing the structural integrity of the spar 106. Specifically, at least one of the filler material 132, the shape of the three-dimensional area of the set of pockets 128, or a combination thereof is used to ensure that the structural integrity of the spar 106 is not reduced with respect to a spar formed without the set of pockets 128. In terms of the shape of the three-dimensional area, an ovoid or a spherical shape has been found to distribute stresses evenly along the set of pockets 128. Put another way, the spherical or ovoid shape of the set of pockets 128 is used to eliminate point-stresses (areas of increased stress) along the set of pockets 128. The set of pockets 128 formed as other shapes (e.g., the rectangular prism) will create point-stress along the vertices of the shape. In terms of the use of the filler material 132, the filler material 132 is used to absorb and distribute the stresses along the filler material 132.

A size and placement of the set of pockets 128 can be used to provide for a desired fragmentation of the airfoil assembly 100 or the spar 106 if the airfoil assembly 100 or the spar 106 were to break. For example, if an external force (e.g., a bird strike) is applied to the airfoil assembly 100 that causes the airfoil assembly 100 to break, the size, location, and density of the set of pockets 128 can affect where the break will occur. As a non-limiting example, the size and placement of the set of pockets 128 are selected to cause breaks to occur at predetermined locations if a force (e.g., operational forces or an external force) were applied to the airfoil assembly 100. Providing the set of pockets 128 to determine where breaks or fractures may occur, in turn, allows for the selective reinforcement of the areas where the breaks or fractures may occur. The selective reinforcement can be done through any suitable process such as, but not limited to, applying reinforcing structures, changing material properties, or a combination thereof.

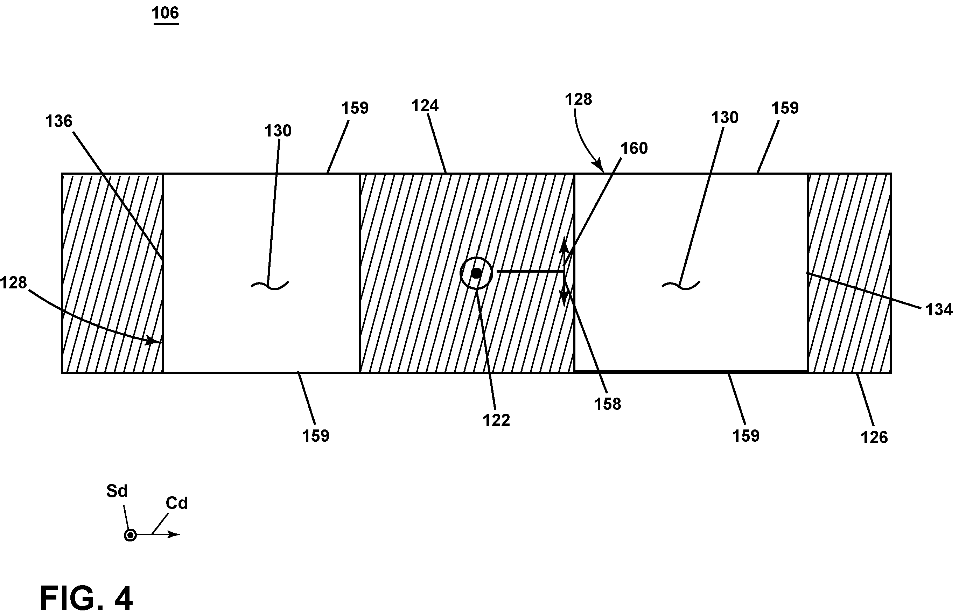

FIG. 4 is a schematic cross-sectional view of the spar 106 as seen from sectional line IV-IV of FIG. 3. For clarity, the spar 106 is shown without the airfoil portion 102 (FIG. 3). The spar 106 includes the spar body 124 with the perimeter surface 126. The spar 106 includes the spar centerline 122. As illustrated, the spar 106 includes a rectangular cross-sectional area. It will be appreciated that the spar 106 includes any suitable shaped cross-sectional area such as, but not limited to, rectangular, circular, triangular, or the like. The spar 106 is split into a first radial half 158 and a second radial half 160, with respect to the spar centerline 122.

The first pocket 134 and the second pocket 136 each extend continuously between two or more respective areas of the perimeter surface 126. Each of first pocket 134 and the second pocket 136 include a respective opening 159 provided along the perimeter surface 126. Specifically, each of the first pocket 134 and the second pocket 136 include two respective openings 159. As such, the first pocket 134 and the second pocket 136 are each defined as through-pockets. The respective cavity 130 of the first pocket 134 and the second pocket 136 open on respective portions of the perimeter surface 126. When provided within the interior 118 (FIG. 3), the respective cavity 130 of the first pocket 134 and the second pocket 136 open to the interior 118.

As illustrated, the first pocket 134 and the second pocket 136 extend between respective portions of the perimeter surface 126 provided on opposing radial sides (e.g., the first radial half 158 and the second radial half 160) of the spar 106. It will be appreciated, however, that the first pocket 134 and the second pocket 136 can extend between two or more portions (e.g., include two or more respective openings 159) of the perimeter surface 126 that are either opposing or non-opposing.

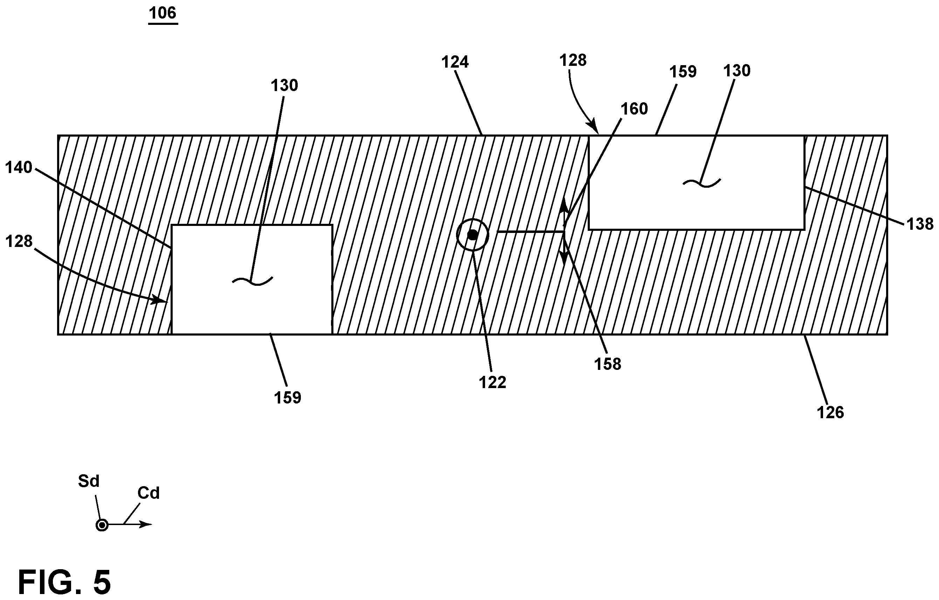

FIG. 5 is a schematic cross-sectional view of the spar 106 as seen from sectional line V-V of FIG. 3. For purposes of illustration, the spar 106 is shown without the airfoil portion 102 (FIG. 3). The spar 106 includes the spar body 124 with the perimeter surface 126. The spar 106 includes the spar centerline 122.

The third pocket 138 and the fourth pocket 140 can each extend continuously from a respective area of the perimeter surface 126 and terminate within the spar body 124. Each of the third pocket 138 and the fourth pocket 140 include a respective opening 159 provided along the perimeter surface 126. As such, the third pocket 138 and the fourth pocket 140 are each defined as partial through-pockets. The respective cavity 130 of the third pocket 138 and the fourth pocket 140 open on a respective portion of the perimeter surface 126. When provided within the interior 118 (FIG. 3), the respective cavity 130 of the third pocket 138 and the fourth pocket 140 opens to the interior 118.

The third pocket 138 and the fourth pocket 140 extend any suitable distance into the spar body 124 such that the third pocket 138 and the fourth pocket 140 either extends past, coincide with, or terminate prior to a transition between the first radial half 158 and the second radial half 160. As a non-limiting example, the third pocket 138 extends from a portion of the perimeter surface 126 on the second radial half 160 and terminates prior to the first radial half 158. As a non-limiting example, the fourth pocket 140 extends from a portion of the perimeter surface 126 on the first radial half 158 and terminates prior to the second radial half 160. Put another way, the openings 159 of at least two pockets (e.g., the third pocket 138 and the fourth pocket 140) are provided along radially opposing sides (e.g., the first radial half 158 and the second radial half 160) of the perimeter surface 126. In some embodiments, a partial through pocket may extend through 5% to 90% of the spar body.

As illustrated, the third pocket 138 and the fourth pocket 140 extend from opposing radial sides (e.g., the first radial half 158 and the second radial half 160) of the perimeter surface 126, with respect to the spar centerline 122. Put another way, the respective opening of the fourth pocket 140 is provided on a radially opposing portion of the perimeter surface 126 from the respective opening of the third pocket 138, with respect to the spar centerline 122. It will be appreciated, however, that the third pocket 138 and the fourth pocket 140 can extend from the same radial side of the perimeter surface 126. As a non-limiting example, both the third pocket 138 and the fourth pocket 140 can extend from either the first radial half 158 or the second radial half 160.

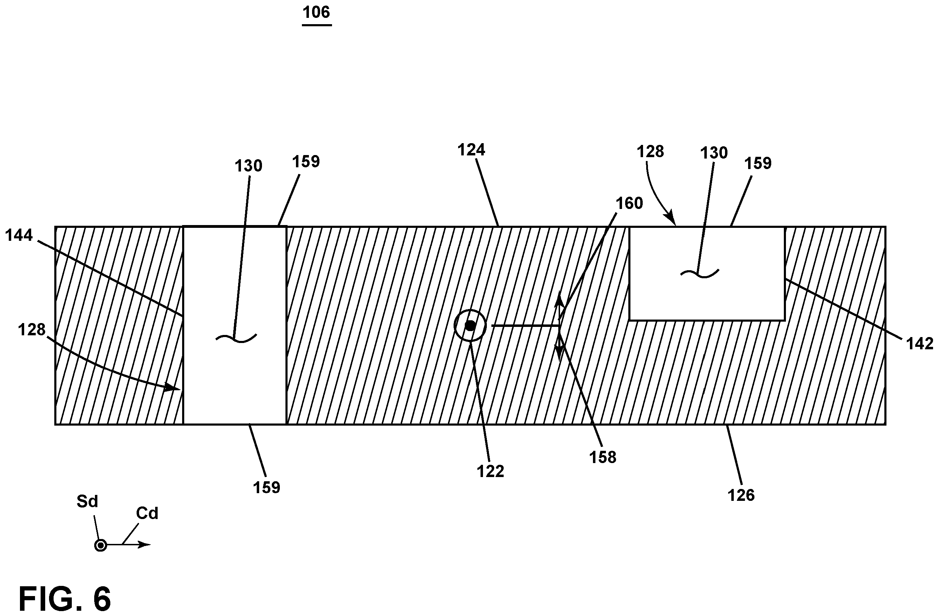

FIG. 6 is a schematic cross-sectional view of the spar 106 as seen from sectional line VI-VI of FIG. 3. For purposes of illustration, the spar 106 is shown without the airfoil portion 102 (FIG. 3). The spar 106 includes the spar body 124 with the perimeter surface 126. The spar 106 includes the spar centerline 122.

The fifth pocket 142 can have a different extension from the sixth pocket 144. As a non-limiting example, the fifth pocket 142 can be a partial through-pocket having a respective opening 159, while the sixth pocket 144 can be a through-pocket having two respective openings 159.

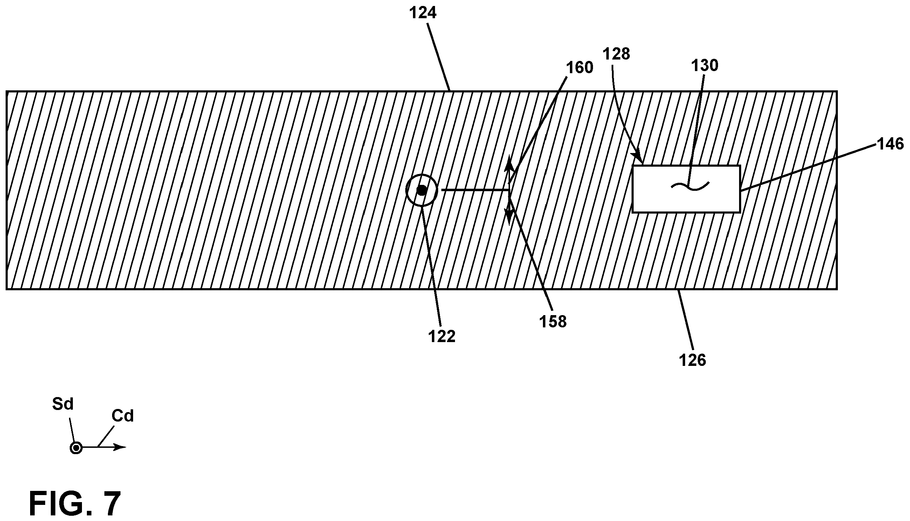

FIG. 7 is a schematic cross-sectional view of the spar 106 as seen from sectional line VII-VII of FIG. 3. The spar 106 includes the spar body 124 with the perimeter surface 126. The spar 106 includes the spar centerline 122. The seventh pocket 146 can be provided entirely within the spar body 124. As such, the seventh pocket 146 can be defined as an internal pocket. In some embodiments, the seventh pocket 146 may extend less than 50%, 20%, 10%, or 5% of Lps.

FIGs. 4-7 illustrate various non-limiting configuration of the set of pockets 128. In some embodiments, each pocket of the set of pockets 128 includes a respective configuration that are the same between pockets. In some embodiments, each pocket of the set of pockets 128 includes a respective configuration that are different between pockets. The non-limiting examples of the configuration of the set of pockets 128 will be described in father detail below; however, each pocket of the set of pockets 128 can include a respective configuration such that the pocket is one of a through-pocket, a partial through-pocket, or an internal pocket.

It will be appreciated that the configuration of a respective pocket of the set of pockets 128 can vary along the respective pocket. As a non-limiting example, the respective pocket can include a first location and a second location that is spaced from the first location in at least one of the spanwise direction (Sd) of FIG. 2, the chordwise direction (Cd) of FIG. 2, or a combination thereof. The respective pocket can be one of a through-pocket, partial through-pocket or internal pocket at the first location. The respective pocket can be one of an other of a through-pocket, partial through-pocket or internal pocket at the second location. The first location, in this instance, is axially spaced from the second location along the spar centerline 122. Alternatively, the respective pocket can be formed entirely as one of a through-pocket, partial through-pocket, or internal pocket.

Benefits of the present disclosure include an airfoil assembly that is lighter than a conventional airfoil assembly without sacrificing a structural integrity of the conventional airfoil assembly. For example, the conventional airfoil assembly can include a spar with a spar body having a solid material or otherwise a solid mass of materials with a single average density. The spar as described herein, however, includes the spar with the set of pockets that have a lower density than a material of the spar body. The areas of reduced density, in turn, create a lighter spar when compared to the conventional spar if the conventional spar and the spar described herein were the same size. Further, the formation of the spar (e.g., the three-dimensional shape being ovoid or spherical, or including the filler material) ensures that the set of pockets do not form areas of decreased strength within the spar. Put another way, the set of pockets do not sacrifice the structural integrity of the spar when compared to the conventional spar.

These pockets are meant to reduce overall component weight and are tailored to minimize effect on the overall stiffness of the airfoil assembly. By adding pockets within the spar, there is minimal effect on the overall stiffness of the airfoil. The pockets can be shaped to minimize stress concentrations due to the point stresses. The pockets can be filled with a low-density material such as foam to prevent excessive resin from entering these regions during manufacture.

To the extent not already described, the different features and structures of the various embodiments can be used in combination, or in substitution with each other as desired. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:

An airfoil assembly comprising an airfoil portion having an outer wall extending between a root and a tip in a spanwise direction, and between a leading edge and a trailing edge, the outer wall defining an interior of the airfoil portion, and a spar coupled to the airfoil portion and extending into the interior, the spar comprising a spar centerline, a spar body defining a perimeter surface, and a plurality of pockets provided within the spar body, each pocket of the plurality of pockets forming a respective cavity within the spar body.

The airfoil assembly of any preceding clause, wherein at least one pocket of the plurality of pockets is a partial through-pocket having a respective opening provided along the perimeter surface.

The airfoil assembly of any preceding clause, wherein at least one pocket of the plurality of pockets is a through-pocket extending through the spar body between at least two respective openings provided along the perimeter surface.

The airfoil assembly of any preceding clause, wherein the at least two respective openings are provided along radially opposing sides of the perimeter surface, with respect to the spar centerline.

The airfoil assembly of any preceding clause, wherein at least one pocket of the plurality of pockets is an internal pocket that is provided entirely within the spar body.

The airfoil assembly of any preceding clause wherein the plurality of pockets include a first pocket including at least one respective opening provided along the perimeter surface, the first pocket being at least a partial through-pocket, and a second pocket separate from the first pocket, the second pocket having at least one respective opening provided along the perimeter surface, the second pocket being a partial through-pocket or an internal pocket.

The airfoil assembly of any preceding clause, wherein the first pocket and the second pocket are each partial through-pockets, and the respective opening of the first pocket is provided on a radially opposing side of the perimeter surface from the respective opening of the second pocket, with respect to the spar centerline.

The airfoil assembly of any preceding clause, wherein the plurality of pockets include a first pocket and a second pocket, with a volume of the first pocket being larger than a volume of the second pocket, and the first pocket is provided axially closer to the root of the airfoil portion, with respect to the spar centerline, than the second pocket.

The airfoil assembly of any preceding clause, wherein the plurality of pockets includes a first pocket and a last pocket, the first pocket being a pocket of the plurality of pockets provided axially nearest the root, the last pocket being a pocket of the plurality of pockets provided axially farthest the root, with a respective volume of each pocket of the plurality of pockets serially increasing in size from the first pocket to the last pocket.

The airfoil assembly of any preceding clause, wherein:

The spar includes an interior portion provided within the interior of the airfoil portion, the interior portion extending a spar interior length in the spanwise direction;

The plurality of pockets extend a pocket extension length with respect to the spar centerline, the pocket extension length being defined as a total axial distance that set of pockets inhabit along the spar, and the pocket extension length is greater than or equal to 0.1% and less than or equal to 100% of the spar interior length.

The airfoil assembly of any preceding clause, wherein the pocket extension length is greater than or equal to 0.1% and less than or equal to 10% of the spar interior length.

The airfoil assembly of any preceding clause, wherein the airfoil portion extends between the root and the tip a span length in the spanwise direction, and the spar extends between 30 to 100 percent of the span length, inclusive of endpoints.

The airfoil assembly of any preceding clause, wherein at least one pocket of the plurality of pockets includes a filler material.

The airfoil assembly of any preceding clause, wherein the plurality of pockets having at least two pockets with varying filler materials.

The airfoil assembly of any preceding clause, wherein the at least one pocket of the plurality of pockets does not include the filler material.

The airfoil assembly of any preceding clause, wherein the spar is a composite preform including the plurality of pockets.

The airfoil assembly of any preceding clause, wherein the airfoil portion and the spar each include a composite material.

The airfoil assembly of any preceding clause, wherein the respective cavity is an ovoid.

A turbine engine comprising an engine core having a compressor section, a combustion section, and a turbine section in serial flow arrangement, the engine core defining a rotor and a stator, a fan section coupled to the rotor, and the airfoil assembly of any preceding clause provided within at least one of the engine core or the fan section.

The turbine engine of any preceding clause, wherein the fan section includes a set of external fan blades and a set of external fan vanes, the airfoil assembly being provided within the set of external fan blades or the set of external fan vanes.

The airfoil assembly of any preceding clause, wherein at least one pocket of the plurality of pockets is a machined pocket.

The airfoil assembly of any preceding clause, wherein at least one pocket of the plurality of pockets has a volume defined as a rectangular prism.

The airfoil assembly of any preceding clause, wherein at least one pocket of the plurality of pockets has a volume defined as a pyramid.

The airfoil assembly of any preceding clause, wherein at least one pocket of the plurality of pockets has a volume defined as a sphere.

The airfoil assembly of any preceding clause, wherein at least one pocket of the plurality of pockets is a single continuous pocket.

The airfoil assembly of any preceding clause, wherein the single continuous pocket tis the only pocket of the spar provided within the interior.

The airfoil assembly of any preceding clause, further comprising a sleeve extending over a respective portion of the perimeter surface.

The airfoil assembly of any preceding clause, wherein the sleeve extends into the interior.

The airfoil assembly of any preceding clause, wherein at least one pocket of the plurality of pockets is provided exterior a region of the spar encased by the sleeve.

The airfoil assembly of any preceding clause, wherein at least one pocket of the plurality of pockets is provided within a region of the spar encased by the sleeve.

The airfoil assembly of any preceding clause, wherein the plurality of pockets have at least two pockets having respective volumes defined by different shapes.

The airfoil assembly of any preceding clause, wherein the plurality of pockets are defined by a pocket density, with the pocket density varying axially along the spar centerline.

The airfoil assembly of any preceding clause, wherein the pocket density is larger near the root than near the distal end.

The airfoil assembly of any preceding clause, further comprising a filler material provided within the cavity, the filler material taking up less than an entirety of a respective volume defined by at least one pocket of the plurality of pockets.

The airfoil assembly of any preceding clause, wherein the spar is cast with at least one pocket of the plurality of pockets .

The airfoil assembly of any preceding clause, wherein the spar is 3D printed with at least one pocket of the plurality of pockets .

The airfoil assembly of any preceding clause, wherein the spar is cured with at least one pocket of the plurality of pockets.

The airfoil assembly of any preceding clause, wherein the at least two pockets are included in a plurality of pockets having a varying density in a localized area of the spar body.

**Claims**

1. An airfoil assembly (100) comprising:

   an airfoil portion (102) having an outer wall (108) extending between a root (114) and a tip (116) in a spanwise direction (Sd), and between a leading edge (110) and a trailing edge (112), the outer wall (108) defining an interior (118) of the airfoil portion (102); and
   a spar (106) coupled to the airfoil portion (102) and extending into the interior (118), the spar (106) comprising a spar centerline (122), a spar body (124) defining a perimeter surface (126), and a plurality of pockets (128) provided within the spar body (124), each pocket of the plurality of pockets (128) forming a respective cavity (130) within the spar body (124).

2. The airfoil assembly (100) of claim 1, wherein at least one pocket of the plurality of pockets (128) is a partial through-pocket (128) having a respective opening (158) provided along the perimeter surface (126).

3. The airfoil assembly (100) of claim 1, wherein at least one pocket of the plurality of pockets (128) is a through-pocket (128) extending through the spar body (124) between at least two respective openings (158) provided along the perimeter surface (126).

4. The airfoil assembly (100) of claim 3, wherein the at least two respective openings (158) are provided along radially opposing sides of the perimeter surface (126), with respect to the spar centerline (122).

5. The airfoil assembly (100) of claim 1, wherein at least one pocket of the plurality of pockets (128) is an internal pocket (128) that is provided entirely within the spar body (124).

6. The airfoil assembly (100) of claim 1, wherein the plurality of pockets (128) include:

   a first pocket (134) including at least one respective opening (158) provided along the perimeter surface (124), the first pocket (134) being at least a partial through-pocket (128); and
   a second pocket (136) separate from the first pocket (134), the second pocket (136) having at least one respective opening (158) provided along the perimeter surface (124), the second pocket (136) being a partial through-pocket (128) or an internal pocket (128).

7. The airfoil assembly (100) of claim 6, wherein:

   the first pocket (134) and the second pocket (136) are each partial through-pockets (128); and
   the respective opening (158) of the first pocket (134) is provided on a radially opposing side of the perimeter surface (124) from the respective opening (158) of the second pocket (134), with respect to the spar centerline (122).

8. The airfoil assembly (100) of claim 1, wherein the plurality of pockets (128) include a first pocket (134) and a second pocket (136), with the a volume of the first pocket (134) being larger than the a volume of the second pocket (136), and the first pocket (134) is provided axially closer to the root (114) of the airfoil portion (102), with respect to the spar centerline (122), than the second pocket (136).

9. The airfoil assembly (100) of claim 1, wherein the plurality of pockets (128) includes a first pocket (134) and a last pocket (128), the first pocket (134) being a pocket (128) of the plurality of pockets (128) provided axially nearest the root (114), the last pocket (128) being a pocket (128) of the plurality of pockets (128) provided axially farthest the root (114), with the respective volume of each pocket (128) of the plurality of pockets (128) serially increasing in size from the first pocket (134) to the last pocket (128).

10. The airfoil assembly (100) of any of claims 1-9, wherein:

the spar (106) includes an interior portion (107) provided within the interior (118) of the airfoil portion (102), the interior portion (107) extending a spar interior length (Ls) in the spanwise direction (Sd);
the plurality of pockets (128) extend a pocket extension length (Lps) with respect to the spar centerline (122), the pocket extension length (Lps) being defined as a total axial distance that set of pockets (128) inhabit along the spar (106); and
the pocket extension length (Lps) is greater than or equal to 0.1% and less than or equal to 100% of the spar interior length (Ls).

11. The airfoil assembly (100) of claim 10, wherein the pocket extension length (Lps) is greater than or equal to 0.1% and less than or equal to 10% of the spar interior length (Ls).

12. The airfoil assembly (100) of any of claims 1-11, wherein at least one pocket of the plurality of pockets (128) includes a filler material (132).

13. The airfoil assembly (100) of claim 12, wherein the plurality of pockets (128) having at least two pockets (128) with varying filler materials (132).

14. The airfoil assembly (100) of any of claims 1-13, wherein the airfoil portion (102) and the spar (106) each include a composite material.

15. The airfoil assembly (100) of any of claims 1-14, wherein the respective cavity (130) includes an ovoid three-dimensional area.

**FIG. 1**

**FIG. 2**

FIG. 3

EP 4 717 592 A1

FIG. 4

FIG. 5

**FIG. 6**

FIG. 7

EP 4 717 592 A1

Europäisches
Patentamt

European
Patent Office

Office européen
des brevets

# EUROPEAN SEARCH REPORT

**Application Number**

EP 25 19 1205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 129 787 A (VIOLETTE JOHN A [US] ET AL) 14 July 1992 (1992-07-14) * column 4, line 6 - column 8, line 45; figures 1-6 * ----- | 1,5,8, 10,12-15 | INV. B64C11/26 F01D5/14 |
| X | US 2010/266415 A1 (VIENS DANIEL V [US] ET AL) 21 October 2010 (2010-10-21) * paragraphs [0014] - [0026]; figures 1-10 * ----- | 1-4,6-15 | |
| X | US 2012/082563 A1 (WILSON JR JACK W [US] ET AL) 5 April 2012 (2012-04-05) * paragraph [0028]; figure 10 * ----- | 1-4,6,7, 10 | |

**TECHNICAL FIELDS SEARCHED (IPC)**

B64C
F01D

The present search report has been drawn up for all claims

| Place of search | Date of completion of the search | Examiner |
|---|---|---|
| Munich | 11 November 2025 | Lambert, Brice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 1205

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2025

| Patent document cited in search report | | Publication date | Patent family member(s) | | Publication date |
|---|---|---|---|---|---|
| US 5129787 | A | 14-07-1992 | DE | 69203444 T2 | 11-04-1996 |
| | | | EP | 0570527 A1 | 24-11-1993 |
| | | | JP | H06505682 A | 30-06-1994 |
| | | | US | 5129787 A | 14-07-1992 |
| | | | WO | 9214646 A1 | 03-09-1992 |
| US 2010266415 | A1 | 21-10-2010 | EP | 2243929 A2 | 27-10-2010 |
| | | | US | 2010266415 A1 | 21-10-2010 |
| US 2012082563 | A1 | 05-04-2012 | NONE | | |

EPO FORM P0459

For more details about this annex : see Official Journal of the European Patent Office, No. 12/82